# EUROPEAN PATENT SPECIFICATION

(11) **EP 1 455 465 B1**
(45) Date of publication and mention of the grant of the patent: **22.02.2012**
(21) Application number: 04251257.4
(22) Date of filing: 04.03.2004
(51) Int. Cl.: H04W 52/04

(54) **Mobile communications system, radio network controller, base station, and method of controlling transmission power**
Mobilkommunikationssystem, Funknetzsteuerungseinheit, Basisstation und Verfahren zur Leistungsregelung
Système de communication mobile, contrôleur de réseau radio, station de base et procédé de contrôler la puissance

(30) Priority: 04.03.2003 JP 2003057710
(43) Date of publication of application: 08.09.2004
(73) Proprietor: NTT DoCoMo, Inc., Tokyo 100-6150 (JP)
(72) Inventor: Sato, Takuya c/o Intellectual Property Department, 2-Chome Chiyoda-ku, Tokyo 100-6150 (JP); Ishii, Minami c/o Intellectual Property Department, 2-Chome Chiyoda-ku, Tokyo 100-6150 (JP); Usuda, Masafumi c/o Intellectual Property Department, 2-Chome Chiyoda-ku, Tokyo 100-6150 (JP); Nakamura, Takehiro c/o Intellectual Property Department, 2-Chome Chiyoda-ku, Tokyo 100-6150 (JP)
(74) Representative: Maury, Richard Philip

(56) References cited:
- EP-A- 0 940 930
- EP-A- 1 047 207
- WO-A-01/95521
- US-A- 6 085 108
- US-A- 6 104 933
- US-B1- 6 473 624

## Description

### BACKGROUND OF THE INVENTION

### 1. Field of the Invention

The present invention generally relates to a mobile communications system having a plurality of base stations and a radio controller controlling each of the plurality of base stations, and particularly relates to a mobile communications system enabled to control transmission power of downlinks from the plurality of base stations to a mobile station.

### 2. Description of the Related Art

In a mobile communications system which adopts CDMA (Code Division Multiple Access) enabling the so-called soft handover, a mobile station can communicate with a plurality of base stations at the time of a handover.

Generally, in mobile communications, a wireless link set up between a base station and a mobile station continually changes due to fading. In order to decrease the effect of fading, the mobile station during the soft handover transmits, to each of the plurality of base stations setting up a link with the mobile station itself, a command (a downlink transmission power control command, such as a TPC bit) controlling transmission power of a downlink (a link from the base station to the mobile station). The base station, based on the downlink transmission power control command, is caused to increase or decrease the transmission power of the downlink as well as to perform power-balancing control with an objective of balancing the transmission power of the downlinks.

On the other hand, the base station transmits, to the mobile station setting up a link with the base station itself, a command (an uplink transmission power control command) controlling the transmission power of an uplink (a link from the mobile station to the base station). The mobile station in response to the uplink transmission power control command is caused to increase or decrease the transmission power of the uplink.

In case closed-loop transmission power control is performed, the mobile station during the soft handover transmits, to the plurality of base stations setting up the link with the mobile station itself, the downlink transmission power control command with one transmission power level. Therefore, while the base station, in the case where propagation loss in the uplink from the mobile station to the base station is small, can accurately receive the downlink transmission power control command, in the case where the propagation loss of the uplink is large, may fail to receive the downlink transmission power control command. As a result, the transmission power of each downlink set up between the corresponding base station and the mobile station may become non-uniform.

Thus, the problem in the case in which the transmission power of each downlink set up between the plurality of base stations and the mobile station may become non-uniform is considered. For example, a case is considered where, as the propagation loss of the uplink is large, the transmission power of the downlink at the base station having failed to receive the downlink transmission power control command from the mobile station becomes smaller than the transmission power of the downlink at the base station in which the uplink propagation loss is the smallest. In this case, the mobile station is likely to fail to receive the uplink power control command transmitted by the base station having a large propagation loss in the uplink. However, the transmission power of the uplink is not much of a problem as it is controlled mainly by the uplink transmission power control command from the base station having a small propagation loss.

On the other hand, a case is considered where, as the propagation loss of the uplink is large, the transmission power of the downlink at the base station having failed to receive the downlink transmission power control command from the mobile station becomes larger than the transmission power of the downlink at the base station in which the propagation loss at the uplink is the smallest. In this case, as the propagation loss of the uplink is large, the transmission power of the downlink at the base station having failed to receive the downlink transmission power control command from the mobile station becomes wastefully large so as to become interference to other mobile stations within a cell serviced by the base station, resulting in a possible decrease in link capacity of the downlinks.

In order to resolve such a problem, for example, in the Patent Document 1 (pages 11 and 12 and FIG. 6), a method is disclosed where, upon receiving the downlink transmission power control command by the base station, the transmission power of the downlink is caused to be increased or decreased in response to the control command and also the transmission power value of the downlink is controlled so as to be caused to approach a predetermined reference value. In Patent Document 1 (pages 11 through 12 and FIG. 6), for a reference value, a maximum transmission power value, a minimum transmission power value, an intermediary value between the maximum transmission power in DB's and the minimum transmission power in DB's, and a statistical value of the transmission power, at the base station, are used.

Also, in the Patent Document 2 (pages 10 through 12 and FIG. 7), a method is disclosed where, categorizing the base stations into a group in which communications quality of the downlink is good and a group in which the communications quality is degraded, the power-balancing control is caused to be continued for the base stations falling within the group in which the communications quality of the downlink is good and a control so as to cause a reduction of the transmission power of the downlink to a predetermined level is performed for the base stations falling within the group in which the communications quality of the downlink is degraded, reducing the interference caused on the downlinks having the good communications quality so as to enable an increasing of the link capacity of the downlinks.
Patent Document 1
   JP11-340910A
Patent Document 2
   JP2002-232353A

However, in the Patent Document 1 as described above, the fact that the downlink communications quality differs from one base station to another is not taken into account. Therefore, for example, when the base station sets the downlink transmission power value to a large value due to the downlink communications quality degrading, in a case where such transmission power value is determined as the reference value, the transmission power of the downlink at other base stations becomes unnecessarily and thus wastefully large.

Also, in the Patent Document 2 as described above, an enabling of reducing interference on a downlink having a good communications quality and causing an increase of link capacity of the downlink is disclosed, but there is no description from the point of view of how a reference value of the transmission power in a power-balancing control should be determined.

Patent document 3 US6473624. In patent document 3 as described above is also disclosed computing a correction value for use in adjusting the current transmission power level based on the difference between the current transmission power level and a reference power level received from a radio controller.

The invention provides a system, a radio controller, a base station and a controlling method as defined in Claims 1, 2, 8 and 10 respectively.

The present invention can provide a mobile communications system that substantially obviates one or more problems caused by the limitations and disadvantages of the related art.

In light of the problems as described above, the present invention can provide a mobile communications system having a plurality of base stations and a radio controller controlling each base station.

Furthermore, the present invention relates to the mobile communications system enabled to control transmission power of a downlink from the base station to the mobile station.

The mobile communications system in an embodiment of the invention enables appropriate controlling of transmission power of a downlink in a power-balancing control.

The radio controller in an embodiment of the invention enables an appropriate controlling of transmission power of the downlinks in a power-balancing control operation.

The base station in an embodiment of the invention enables an appropriate controlling of transmission power of a downlink in power-balancing control.

The method of controlling the transmission power in an embodiment of the invention enables an appropriate controlling of transmission power of the downlinks in power-balancing control.

Other objects and further features of the present invention will be apparent from the following detailed descriptions when read in conjunction with the accompanying drawings.

### BRIEF DESCRIPTION OF THE DRAWINGS

FIG. 1 is a schematic diagram illustrating an example of a configuration of a mobile communications system according to an embodiment of the present invention;
FIG. 2 is a block diagram illustrating an example of a configuration of a base station according to a first embodiment;
FIG. 3 is a block diagram illustrating an example of a configuration of a radio controller according to first embodiment;
FIG. 4 is an example of an offset-value table;
FIG. 5 is a sequence diagram illustrating an operation of the mobile communications system according to an example;
FIG. 6 is a block diagram illustrating an example of a configuration of the radio controller according to the first embodiment;
FIG. 7 is a sequence diagram illustrating an operation of the mobile communications system according to the first embodiment;
FIG. 8 is a block diagram illustrating an example of a configuration of the base station according to the second embodiment; and
FIG. 9 is a sequence diagram illustrating an operation of the mobile communications system according to the second embodiment;

### DETAILED DESCRIPTION OF THE PREFERRED EMBODIMENTS

In the following, embodiments of the present invention are described with reference to the accompanying drawings.

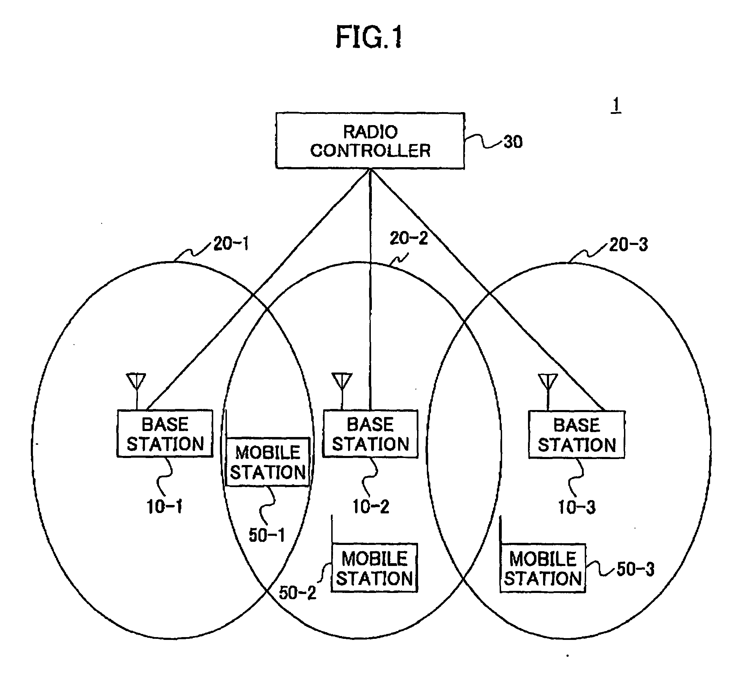

FIG. 1 is a diagram illustrating an example of a configuration of a mobile communications system according to one embodiment of the present invention. A communications system 1 illustrated in FIG. 1 adopts CDMA enabling the so-called soft handover, and comprises base stations 10-1, 10-2, and 10-3 (referred to as "a base station 10" below where appropriate, combining the base stations 10-1, 10-2, and 10-3) and mobile stations 50-1, 50-2, and 50-3 (referred to as "a mobile station 50" below where appropriate, combining the mobile stations 50-1, 50-2, and 50-3).

In FIG. 1, the base stations 10-1, 10-2, and 10-3 service the cells 20-1, 20-2, and 20-3, respectively (referred to as "a cell 20" below where appropriate, combining these cells 20-1, 20-2, and 20-3) as the wireless zones. The mobile station 50-1 residing at an area overlapped by the cell 20-1 and cell 20-2 is undergoing a soft handover, being enabled to communicate with both the base station 10-1 servicing the cell 20-1 and the base station 10-2 servicing the cell 20-2.

In the mobile communications system 1, power-balancing control is performed so that the transmission power value of the downlink from each base station 10 having set up a link with the mobile station 50 during the soft handover to the mobile station 50 is caused to approach a target value. Below, first and second embodiments detailing the power-balancing control at the mobile communications system 1 is provided.

### (Example)

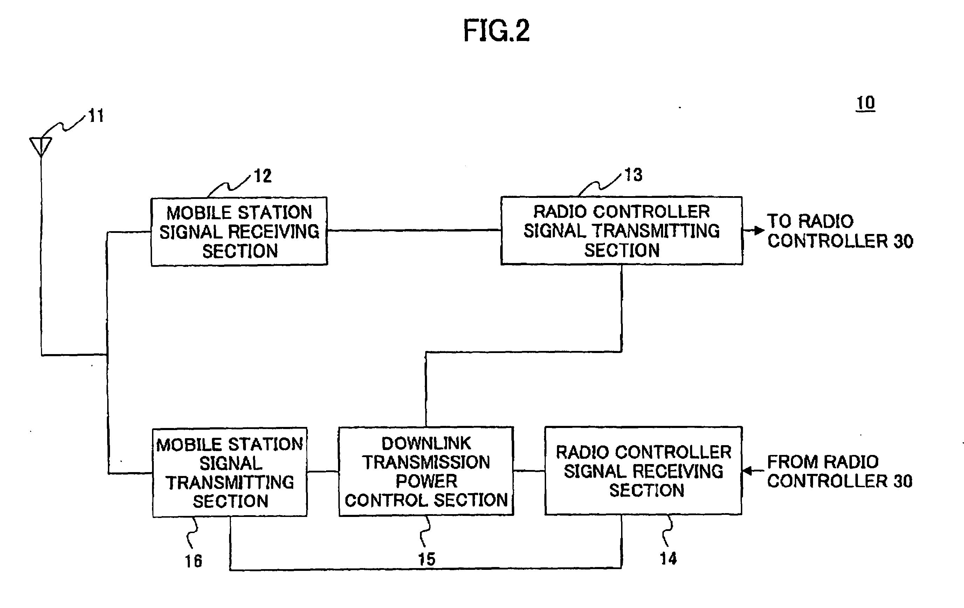

FIG. 2 is a diagram illustrating an example of a configuration of a base station 10 according to the first embodiment. The base station 10 in FIG. 2 comprises an antenna 11, a mobile station signal receiving section 12, a radio controller signal transmitting section 13, a radio controller signal receiving section 14, a downlink transmission power control section 15, and a mobile station signal transmitting section 16.

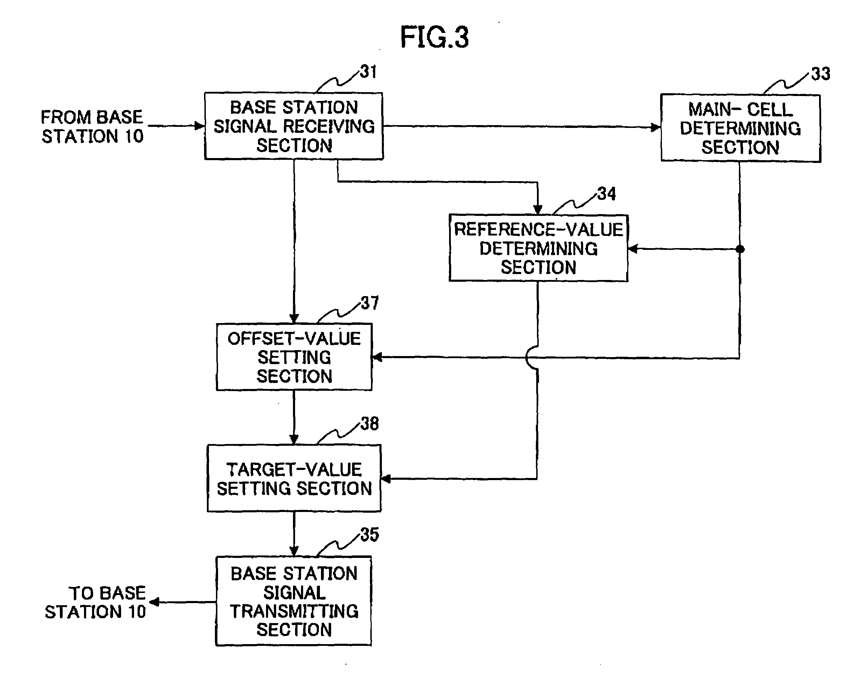

On the other hand, FIG. 3 is a diagram illustrating an example of a configuration of a radio controller 30 according to an example. The radio controller 30 comprises a base station signal receiving section 31, a main-cell determining section 33, a reference-value determining section 34, a base station signal transmitting section 35, an offset-value setting section 37, and an target-value setting section 38.

First, a description is provided, referring to FIG. 2. The mobile station signal receiving section 12 within the base station 10 having set up a link with a mobile station 50 during a soft handover receives a user signal from the mobile station 50 via the antenna 11. Moreover, the mobile station signal receiving section 12 receives via the antenna 11 the communications quality (below referred to as "downlink communications quality") of the downlink measured by the mobile station 10 during the soft handover. Herein, the downlink communications quality may be a random parameter, such as a received level of a common-pilot channel, a received SNIR, a block-error rate, propagation loss, an amount of interference, and the like, for example. The mobile station signal receiving section 12 outputs to the radio controller signal transmitting section 13 the received user signal and the downlink communications quality.

The radio controller signal transmitting section 13 transmits an input user signal to the radio controller 30. Also, the radio controller signal transmitting section 13 includes identifying information of the cell 20 (cell-identifying information) serviced by the base station itself 10 to the input downlink communications quality information so as to be transmitted to the radio controller 30. Furthermore, the radio controller signal transmitting section 13 obtains a transmission power value of the downlink (below referred to as "a downlink transmission power value") having been set up at that time by the downlink transmission power control section 15 and includes the cell-identifying information of the cell 20 serviced by the base station 10 itself so as to be transmitted to the radio controller 30.

Next, a description is provided, referring to FIG. 3. The base station signal receiving section 31 within the radio controller 30 receives a user signal, downlink communications quality, and a downlink transmission power value transmitted from the corresponding base station 10 having set up a link with the mobile station 50 during the soft handover. The base station signal receiving section 31 outputs the user signal to a switching equipment not shown. The base station signal receiving section 31 outputs the downlink communications quality to the main-cell determining section 33 and the offset-value setting section 37, and the downlink transmission power value to the reference value determining section 34.

The main-cell determining section 33 determines, out of the cells 20 serviced by the corresponding base stations 10 having set up a link with the mobile station 50 during the soft handover, as the main cell, the cell 20 having the best downlink communications quality. More specifically, the main-cell determining section 33 determines the best downlink communications quality from the downlink communications qualities from the corresponding base station signal receiving sections 31. Next, the main-cell determining section 33 determines as the main cell the cell 20 serviced by the base station 10 corresponding to the best downlink quality. Furthermore, the main-cell determining section 33 outputs to the reference-value determining section 34 and the offset-value setting section 37 the identifying information of the cell corresponding to the best downlink communications quality, or the cell-identifying information of the main cell.

The reference-value determining section 34 determines from the downlink transmission power value from the base station signal receiving section 31, as the reference value, the downlink transmission power value at the base station 10 servicing the main cell. More specifically, the reference-value determining section 34 extracts the cell-identifying information from the corresponding downlink transmission power values from the base station signal receiving section 31. Next, the reference-value determining section 34 specifies from the extracted corresponding cell-identifying information, the information matching the cell-identifying information from the main cell-determining section 33. Furthermore, the reference-value determining section 34 determines, as the reference value, the downlink transmission power value having included therein the specified cell-identifying information. The determined reference value is output to the target-value setting section 38.

The offset-value setting section 37, based on the downlink communications qualities from the base station signal receiving section 31, for the base stations 10 having set up a link with the mobile station 50 during the handover, determines the offset values to be added to the reference value. Furthermore, herein the offset value is a negative value.

More specifically, the offset-value setting section 37 for the base station 10 servicing the main cell sets a predetermined value as the offset value for use by the main cell, and for the base stations 10 servicing a cell other than the main cell (below referred to as "a subcell") sets a predetermined value, smaller than the offset value for use by the main cell, as the offset value for use by the subcells. Herein, the offset value for use by the main cell is a value larger than the offset value for use by the subcells.

Alternatively, the offset-value setting section 37, out of the downlink communications qualities from the base station signal receiving section 31, specifies the downlink communications quality which includes the cell-identifying information from the main-cell determining section 33, recognizes the specified downlink communications quality as the downlink communications quality of the main cell, and the other downlink communications qualities as the downlink communications quality of the corresponding subcells. Furthermore, the offset-value setting section 37, based on the difference between the main cell downlink communications quality and the respective subcell communications qualities, sets the offset value for use by the subcells. For example, in a case where the propagation loss is used as the downlink communications quality, the offset-value setting section 37 for the base station 10 servicing the main cell sets a predetermined value as the offset value for use by the main cell. On the other hand, the offset-value setting section 37 for the base stations 10 servicing the subcells sets as the offset value for use by each subcell, the summed value of the offset value for use by the main cell, and the value subtracting the propagation loss at the subcell from the propagation loss at the main cell. Herein, in a case where the difference between the propagation loss at the main cell and the propagation loss at the subcell is small, the offset value for use by the subcell is a value close to the offset value for use by the main cell. On the other hand, in a case where the difference between the propagation loss at the main cell and the propagation loss at the subcell is large, the offset value for use by the subcell is a value much smaller than the offset value for use by the main cell.

Furthermore, the offset-value setting section 37 for the base station 10 servicing the subcell may be set as the offset value for use by the subcell, the summed value of a fixed offset value for use by the subcell, and the value subtracting the propagation loss at the subcell from the propagation loss at the main cell. Furthermore, the fixed offset value for use by the subcell is a value smaller than the offset value for use by the main cell.

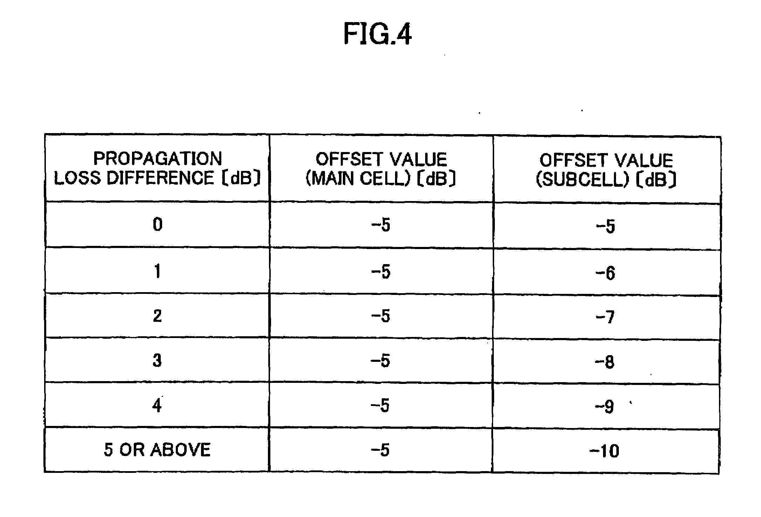

Also, the offset-value setting section 37 has an offset-value table, enabling a setting of the offset value based on the offset-value table. For example, in a case where the propagation loss is used as the downlink communications quality, the offset-value table such as the one illustrated in FIG. 4 is used. The offset-value table illustrated in FIG. 4 is a table enabled to set the offset values at the main cells and the subcells in accordance with the difference between the propagation losses and the predetermined propagation losses at the main cell and the subcell. For example, in a case the difference of the predetermined propagation loss from the propagation loss at the subcell is 2 dB, the offset value for use by the subcell is -7 dB.

Furthermore, while a case of using the propagation loss as the downlink communications quality is described above, the offset-value setting section 37 may similarly set the offset value in a case of using an amount of interference.

The offset-value setting section 37, upon setting the offset value according to any of the methods as described above, causes to be included the cell-identifying information of the cell 20 serviced by the base station 10 corresponding to the offset value. The cell-identifying information is included in the downlink communications quality information from the base station signal receiving section 31. Furthermore, the offset-value setting section 37 outputs the offset value information having included the cell-identifying information to the target-value setting section 38.

The target-value setting section 38, as a target value, adds to the reference value from the reference-value determining section 34 the offset value from the offset-value setting section 37 so as to set a target value. Furthermore, the target-value setting section 38 outputs to the base station signal transmitting section 35 the target value.

The base station signal transmitting section 35 transmits the target value from the target-value setting section 38 to the base station 10 servicing the cell 20 specified by the cell-identifying information included in the offset value. Also, the base station signal transmitting section 35, in a case where a user signal to the mobile station 50 during the soft handover exists, transmits the user signal to the base stations 10 having set up the link with the mobile station 50 during the soft handover.

Again, a description is provided, referring to FIG. 2. The radio controller signal receiving section 14 within the base station 10 having set up the link with the mobile station 50 during the soft handover receives the reference value having added the offset value, or the target value (below referred to as "a reference value adding an offset value, or a target value") and outputs it to the downlink transmission power control section 15. Also, the radio controller signal receiving section 14, in a case where the radio controller 30 has transmitted a user signal, receives the user signal so as to be output to the mobile station signal transmitting section 16.

The downlink transmission power control section 15 sets the downlink transmission power value so as to cause it to approach the input target value. The mobile station signal transmitting section 16 transmits the user signal and the like, at the downlink transmission power value set up by the downlink transmission power control section 15, to the mobile station 50 during the soft handover having set up the link with the mobile station 50 during the soft handover.

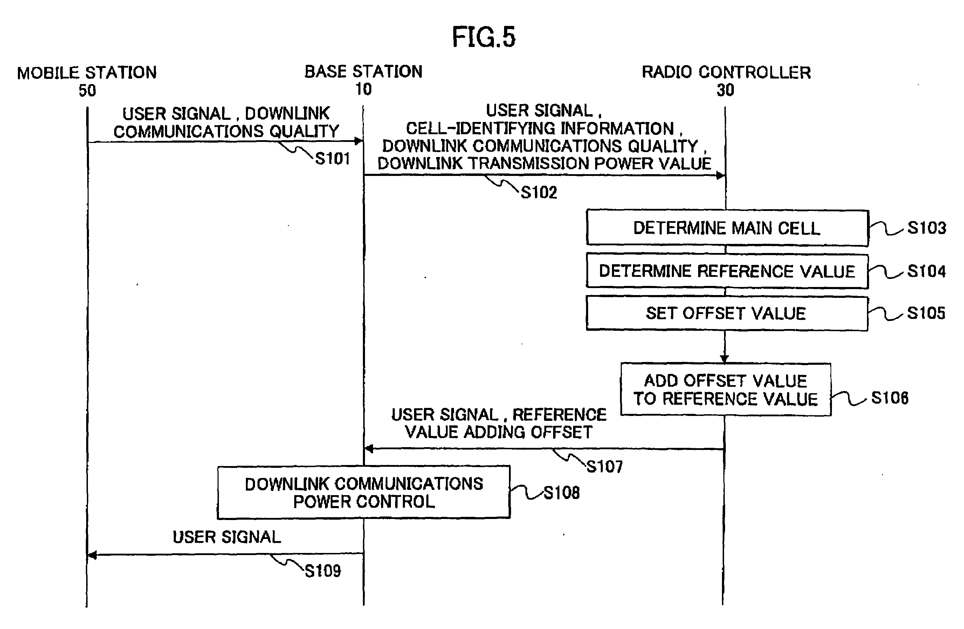

Next, an operation of the mobile communications system 1 according to the example is described. FIG. 5 is a sequence diagram illustrating an operation of the mobile communications system 1 according to the example. The base station 10 having set up the link with the mobile station 50 during handover, upon receiving the user signal and the downlink communications quality transmitted from the mobile station 50 (step 101), transmits to the radio controller 30 the user signal, the downlink communications quality, the cell-identifying information of the cell serviced by the own base station, and the downlink transmission power value at that time (step 102).

The radio controller 30, based on the downlink communications quality transmitted from the respective base station 10 having set up the link with the mobile station 50 during the soft handover, determines as the main cell, a cell 20 having the best downlink communications quality of the cells 20 serviced by the base stations 10. (step 103)

Next, the radio controller 30 determines as the reference value the downlink transmission power value at the base station 10 servicing the main cell out of the received downlink transmission power values (step 104). Next, the radio controller 30 determines the offset values for the corresponding base stations 10 having set up the link with the mobile station 50 during the soft handover (step 105). Furthermore, the radio controller 30 adds to the reference value the corresponding offset value (step 106) and sends the reference value adding the offset value, as the target value, and the user signal to the corresponding base stations 10 having set up the link with the mobile station 50 during the soft handover (step 107).

The base station 10 having set up the link with the mobile stations 50 during the soft handover sets the downlink transmission power value so as to cause it to approach the received target value (step 108). Furthermore, the base station 10 having set up the link with the mobile station 50 during the soft handover transmits, at the downlink transmission power value set up, to the mobile station 50 during the soft handover, the user signal and the like (step 109) .

### (The first embodiment)

Next, the first embodiment is described. The configuration of the base station 10 according to the first embodiment is the same as the base station 10 as illustrated in FIG. 2. In other words, the base station 10 according to the first embodiment comprises an antenna 11, a mobile station signal receiving section 12, a radio controller signal transmitting section 13, a radio controller signal receiving section 14, a downlink transmission power control section 15, and a mobile station signal transmitting section 16. Below, the base station 10 in the first embodiment is described, referring to FIG. 2.

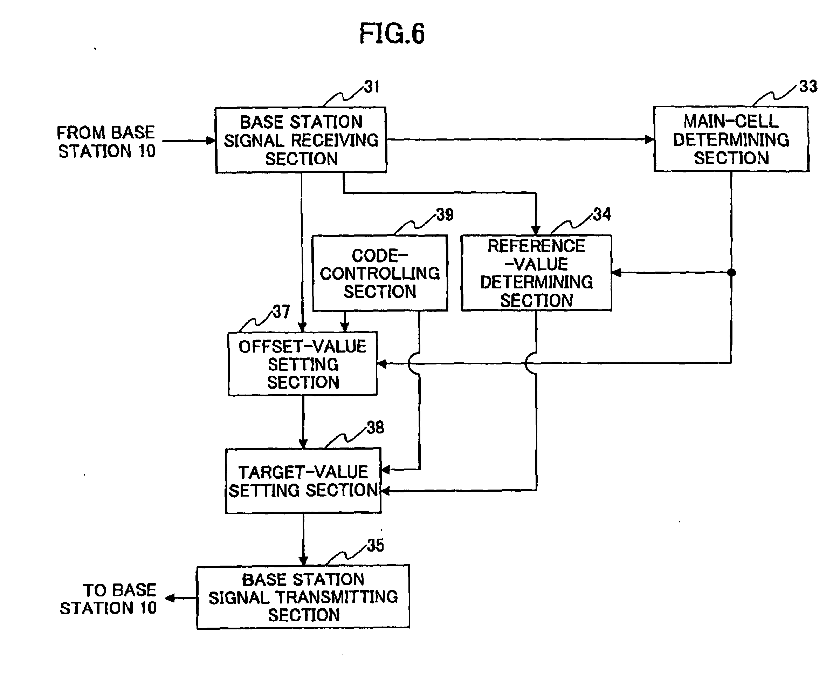

On the other hand, the configuration of the radio controller 30 in the first embodiment is different from the radio controller 30 in the example illustrated in FIG. 3. FIG. 6 is a diagram illustrating an example of a configuration of a radio controller 30 according to the first embodiment. The radio controller 30 comprises a base station signal receiving section 31, a main-cell determining section 33, a reference-value determining section 34, a base station signal transmitting section 35, an offset-value setting section 37, a target-value setting section 38, and a code-controlling section 39.

First, a description is provided, referring to FIG. 2. The mobile station signal receiving section 12 within the base station 10 having set up the link with the mobile station 50 during the soft handover, receives via the antenna 11 the downlink communications quality measured by the mobile station 10 during the soft handover. Furthermore, the mobile station signal receiving section 12 outputs the received user signal and the downlink communications quality to the radio controller signal transmitting section 13.

The radio controller signal transmitting section 13, transmits the input user signal to the radio controller 30. Also, the radio controller signal transmitting section 13 after having included the cell-identifying information of the cell 20 serviced by the own base station with the input downlink communications quality information, transmits it to the radio controller 30. Furthermore, the radio controller signal transmitting section 13 obtains the downlink transmission power value set up at that time by the downlink transmission power control section 15 and, after having included the cell-identifying information of the cell 20 serviced by the own base station, transmits it to the radio controller 30. Also, the radio controller signal transmitting section 13, after having added to the information identifying the downlink communications set up with the mobile station 50 during the handover (below referred to as "a call-identifying information") the cell-identifying information of the cell 20 serviced by the own base station, transmits it to the radio controller 30.

Next, a description is provided using FIG. 6. The base station signal receiving section 31 within the radio controller 30 receives the user signal, the downlink communications quality, the downlink transmission power value, and the call-identifying information transmitted from the base stations 10 having set up with the link with the mobile station 50 during the soft handover. Furthermore, the base station signal receiving section 31 outputs the user signal to a switching equipment not shown and the downlink communications quality to the main-cell determining section 33 and the offset-value setting section 37. Also, the base station signal receiving section 31 outputs the downlink transmission power value to the reference-value determining section 34 and the call-identifying information to the offset-value setting section 37.

The main-cell determining section 33, as in the first embodiment, out of the cells 20 serviced by the base stations 10 having set up the link with the mobile station 50 during the soft handover, determines the cell 20 having the best downlink communications quality as the main cell and outputs the cell-identifying information of the main cell to the reference-value determining section 34 and the offset-value setting section 37.

The reference value determining section 34, out of the downlink transmission power values from the base station signal receiving section 31, determines the downlink transmission power value at the base station 10 servicing the main cell as the reference value so as to be output to the target-value setting section 38.

The offset-value setting section 37, based on the downlink communications quality from the base station signal receiving section 31, for the base stations 10 having set up the link with the mobile station 50 during the handover, sets the offset value to be added to the reference value. The specific method of determining the offset value is the same as in the first embodiment. Furthermore, the offset-value setting section 37 causes to be included in the set offset value the cell-identifying information of the cell 20 serviced by the base station 10 corresponding to the offset value.

Next, the offset-value setting section 37, in a case where a secondary scrambling code is used in the downlink communications specified by the call-identifying information from the base station signal receiving section 31, adds a predetermined value to the offset value of the corresponding base station 10.

More specifically, the code-controlling section 39 controls by linking the scrambling code with the call-identifying information of the downlink communication using the scrambling code. The offset-value setting section 37, based on the information controlled by the code-controlling section 39 and the call-identifying information from the base station signal receiving section 31, specifies the scrambling code being used in the downlink communications specified by the call-identifying information from the base station signal receiving section 31, and furthermore determines whether the secondary scrambling code is included in the scrambling code. In a case where the secondary scrambling code is included in the scrambling code, the offset-value setting section 37 specifies the base station 10 servicing the cell 20 corresponding to the cell-identifying information being added to the call-identifying information from the base station signal receiving section 31. Furthermore, the offset-value setting section 37 adds a predetermined value to the offset value corresponding to the specified base station 10. Herein the predetermined value is a positive value. Furthermore, with the target-value setting section 38 described below performing a process of adding the predetermined value to the reference value in the case where the secondary scrambling code is included in the scrambling code, the offset-value setting section 37 does not perform the process of adding the predetermined value to the offset value as described above.

Furthermore, the offset-value setting section 37 outputs to the target-value setting section 38 a set offset value, or a new offset-value having added a predetermined value to the determined offset value.

The target-value setting section 38, as in the first embodiment, adds the offset value from the offset-value setting section 37 to the reference value from the reference value determining section 34 so as to set the target value.

Also, when the secondary scrambling code is used in the downlink communications specified by the call-identifying information from the base station signal receiving section 31, in a case of the offset-value setting section 37 not performing the process of adding a predetermined value to the offset-value of the corresponding base station 10, the target-value setting section 38 further adds the predetermined value to the target value. More specifically, the target-value setting section 38, based on the information controlled by the code-controlling section 39 and the call-identifying information from the base station signal receiving section 31, specifies the scrambling code used in the downlink communications specified by the call-identifying information input via the offset-value setting section 37 from the base station signal receiving section 31, and furthermore determines whether the secondary scrambling code is included in the scrambling code. In the case where the secondary scrambling code is included in the scrambling code, the target-value setting section 38 specifies the offset value included in the cell-identifying information having added the call-identifying information from the base station signal receiving section 31, and adds a predetermined value to the reference value adding the specified offset value. Herein the predetermined value is a positive value.

Furthermore, the target-value setting section 38 outputs the reference value adding the offset value, or the target value to the base station signal transmitting section 35.

The base station signal transmitting section 35, transmits the target value from the target-value setting section 38 to the base station 10 servicing the cell 20 specified by the cell-identifying information included in the offset value. Also, the base station signal transmitting section 35, in a case where the user signal to the mobile station 50 during the soft handover exists, transmits the user signal to the base stations 10 having set up the link with the mobile station 50 during the soft handover.

Again a description is provided, referring to FIG. 2. The radio controller signal receiving section 14 within, the base stations 10 having set up the link with the mobile station 50 during the soft handover, receives the target value transmitted from the radio controller 30 so as to be output to the downlink transmission power control section 15. Also, the radio controller signal receiving section 14, in a case where the radio controller 30 has transmitted a user signal, receives the user signal, so as to be output to the mobile station signal transmitting section 16.

The downlink transmission power control section 15, sets the downlink transmission power value so as to cause it to approach the input target value. The mobile station signal transmitting section 16 transmits, at the downlink transmission power value set up by the downlink transmission power control section 15, the user signal and the like to the mobile stations 50 having set up the link with the own base station during the handover.

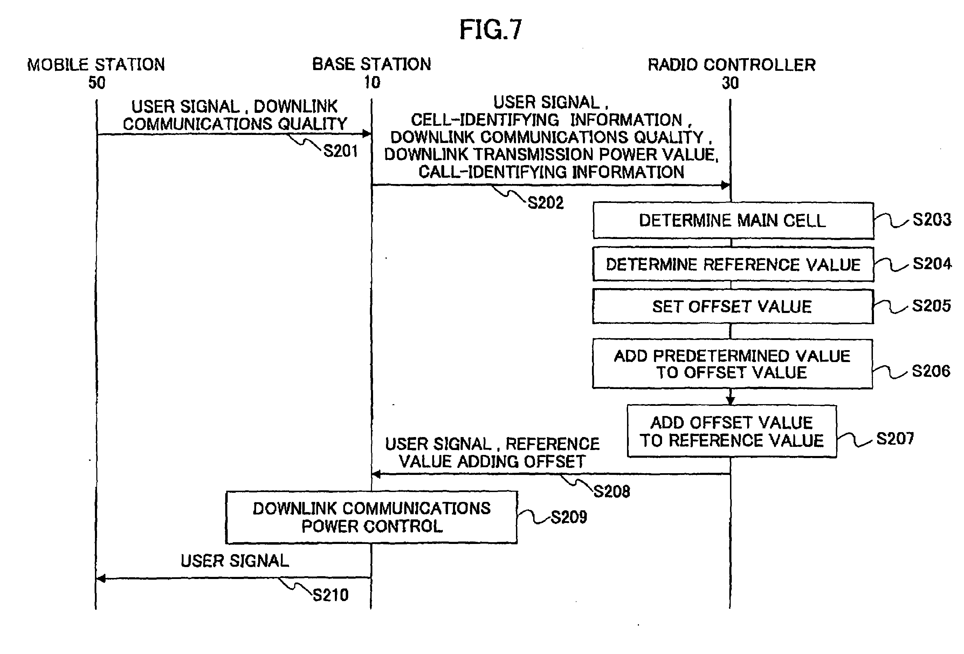

Next, an operation of the mobile communications system 1 in the first embodiment is described. FIG. 7 is a sequence diagram illustrating an operation of the mobile communications system 1 according to the first embodiment. Furthermore, FIG. 7 is an example of a case of the offset-value setting section 37 within the radio controller 30 adding to the offset value a predetermined value. The base station 10, having set up the link with the mobile station during the soft handover, upon receiving the user signal and the downlink communications quality transmitted from the mobile station 50 (step 201) transmits to the radio controller 30 the user signal and the downlink communications quality, the cell-identifying information of the cell serviced by the own base station, the downlink transmission power value at that time, and the call-identifying information corresponding to the downlink communications having been set up with the mobile station 50 during the handover (step 202).

The radio controller 30, based on the downlink communications quality transmitted from the base stations 10 having set up the link with the mobile station 50 during the soft handover, out of the cells 20 serviced by the base stations 10, determines the cell 20 having the best downlink communications quality as the main cell (step 203).

Next, the radio controller 30 determines the downlink transmission power value at the base station 10 servicing the main cell, out of the received downlink transmission power values, as the reference value (step 204). Next the radio controller 30 determines the offset values for the base stations 10 having set up the link with the mobile station 50 during the soft handover (step 205). Furthermore, the radio controller 30, based on the call-identifying information from the base stations 10, determines whether the secondary scrambling code is used in the downlink communications at the base station 10, and, in a case where it is used, adds a predetermined value to the offset value corresponding to the base station 10 (step 206). Then, the radio controller 30 adds to the reference value the corresponding offset value (step 207) and transmits the reference value adding the offset value, or the target value and the user signal to the corresponding base stations 10 having set up the link with the mobile station 50 during the soft handover (step 208).

The base station 10 having set up the link with the mobile station 50 during the soft handover sets up the downlink transmission power value so as to cause it to approach the received target value (step 209). Furthermore, the base station 10 having set up the link with the mobile station 50 during the soft handover transmits the set-up downlink transmission power value, the user signal, and the like to the mobile station 50 during the soft handover (step 210).

### (The second embodiment)

While in the first embodiment, when the secondary scrambling code is used for the downlink communications at the base station 10, the radio controller 30 adds the predetermined value to the reference value adding the offset value or the target value corresponding to the base station 10, in the present embodiment the base station 10 having obtained the target value performs such process.

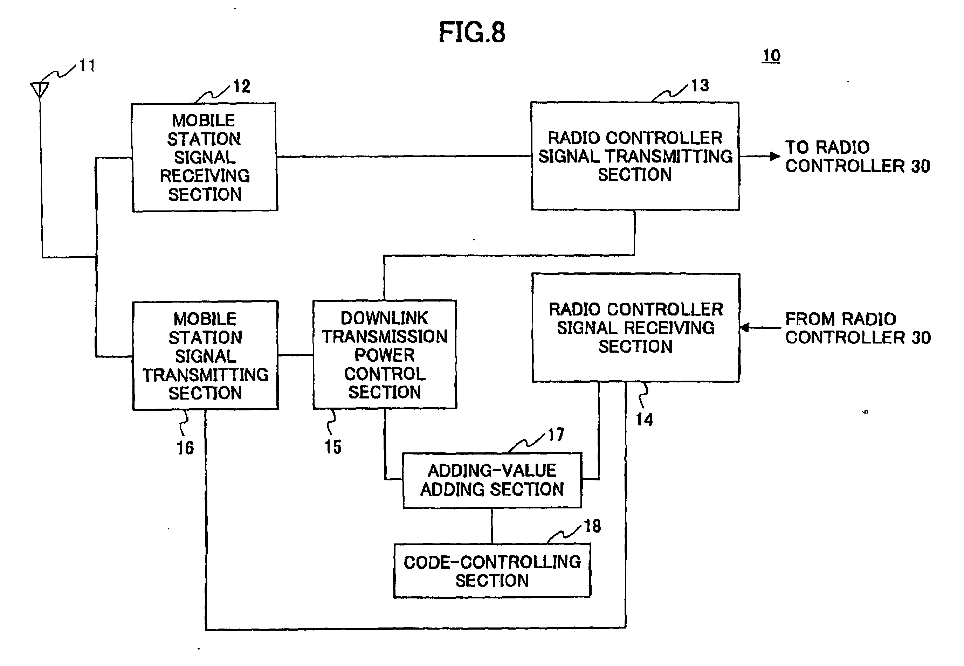

FIG. 8 is a diagram illustrating an example of a configuration of a base station 10 according to the second embodiment. The base station 10 illustrated in FIG. 8 comprises an antenna 11, a mobile station signal receiving section 12, a radio controller signal transmitting section 13, a radio controller signal receiving section 14, a downlink transmission power control section 15, a mobile station signal transmitting section 16, an adding-value adding section 17, and a code-controlling section 18.

On the other hand, the configuration of the radio controller 30 in the second embodiment is the same as the configuration of the radio controller 30 illustrated in FIG. 3. In other words, the radio controller 30 comprises a base station signal receiving section 31, a main-cell determining section 33, a reference-value determining section 34, a base station signal transmitting section 35, an offset-value setting section 37, and the target-value setting section 38. Below, the radio controller 30 in the second embodiment is described, referring to FIG. 3.

First, a description is provided, referring to FIG. 8. The mobile station signal receiving section 12 within the base station 10 having set up with the link with the mobile station 50 during the soft handover as receives via the antenna 11 the downlink communications quality measured by the mobile station 10 during the soft handover. Furthermore, the mobile station signal receiving section 12 outputs the received user signal and the downlink communications quality to the radio controller signal transmitting section 13.

The radio controller signal transmitting section 13, transmits the input user signal to the radio controller 30. Also, the radio controller signal transmitting section 13 causes to be included the cell-identifying information of the cell 20 serviced by the own base station with the input downlink communications quality so as to be transmitted to the radio controller 30. Furthermore, the radio controller signal transmitting section 13, after having obtained the downlink transmission power value having been set up at the time by the downlink transmission power control section 15, causes to be included the cell-identifying information of the cell 20 serviced by the own base station so as to be transmitted to the radio controller 30.

Next, a description is provided, referring to FIG. 3. The radio controller 30 performs the same process as in the example. In other words, the base station signal receiving section 31 within the radio controller 30 receives the user signal, the downlink communications quality, and the downlink transmission power value transmitted from the base stations 10 having set up the link with the mobile station 50 during the handover, and outputs the user signal to a switching equipment not shown, the downlink communications quality to the main-cell determining section 33 and the offset-value setting section 37, and the downlink transmission power value to the reference value determining section 34.

The main-cell determining section 33, out of the cells 20 serviced by the base stations 10 having set up the link with the mobile station 50 during the soft handover, determines the cell 20 having the best downlink communications quality as the main cell, and outputs the cell-identifying information of the main cell to the reference-value determining section 34 and the offset-value setting section 37.

The reference-value determining section 34 determines as the reference value the downlink transmission power value at the base station 10 servicing the main cell out of the downlink transmission power values from the base station signal receiving section 31 so as to be output to the target-value setting section 38.

The offset-value setting section 37, based on the downlink communications quality from the base station signal receiving section 31, for the base stations 10 having set up the link with the mobile station 60 during the handover, sets the offset value to be added to the reference value. Furthermore, the offset-value setting section 37 causes to be included with the set offset value the cell-identifying information of the cell 20 serviced by the base station 10 corresponding to the offset value so as to be output to the target-value setting section 38.

The target-value setting section 38, to the reference value from the reference-value determining section 34, adds the offset value from the offset-value setting section 37 so as to set the target value. Furthermore, the target-value setting section 38 outputs the target value to the base station signal transmitting section 35.

The base station signal transmitting section 35 transmits the target value from the target-value setting section 38 to the base station 10 servicing the cell 20 specified by the cell-identifying information being included in the offset value. Also, the base station signal transmitting section 35, in a case where a user signal to the mobile station 50 during the soft handover exists, transmits the user signal to the base stations 10 having set up the link with the mobile station 50 during the soft handover.

Again, a description is provided, referring to FIG. 8. The radio controller signal receiving section 14 within the base station 10 having set up the link with the mobile station 50 during the soft handover receives the reference value having added the offset value (the reference value adding the offset) or the target value transmitted from the radio controller 30 so as to be output to the adding-value adding section 17.

The adding-value adding section 17, in a case where the secondary scrambling code is used in the downlink communications performed with the mobile station 50 during the handover, adds a predetermined value to the target value.

More specifically, the code-controlling section 18 controls by linking the scrambling code and the call-identifying information of the downlink communications using the scrambling code. The adding-value adding section 17, based on the information controlled by the code-controlling section 18 and the call-identifying information corresponding to the downlink communications being performed with the mobile station 50 during the handover, specifies the scrambling code used in the downlink communications specified by the call-identifying information, and, furthermore, determines whether the secondary scrambling code is included in the scrambling code. In the case where secondary scrambling code is included in the scrambling code, the adding-value adding section 17 adds a predetermined value to the reference value adding the offset, or the target value. Furthermore, herein the predetermined value is a positive value.

The downlink transmission power control section 15 sets up the downlink transmission power value so to cause it to approach the target value to which the predetermined value from the adding-value adding section 17 is further added. The mobile station signal transmitting section 16, at the downlink transmission power value set up by the downlink transmission power control section 15, transmits the user signal and the like to the mobile station 50 having set up the link with the own base station during the soft handover.

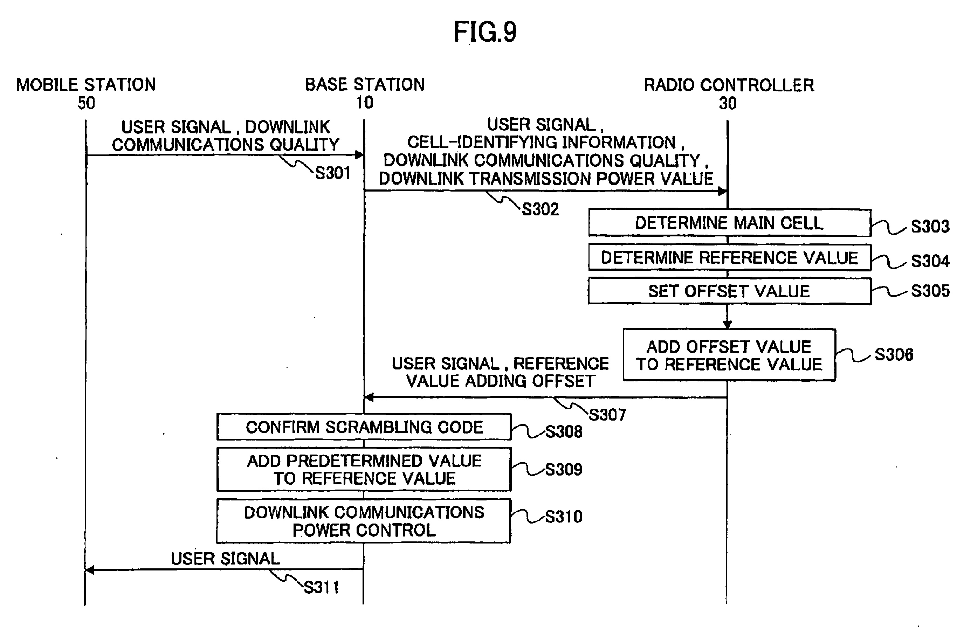

Next, an operation of the mobile communications system 1 in the second embodiment is described. FIG. 9 is a sequence diagram illustrating an operation of the mobile communications system 1 according to the second embodiment. The base station 10 having set up the link with the mobile station during the soft handover, upon receiving the user signal and the downlink communications quality transmitted from the mobile station 50 (step 301), transmits to the radio controller 30 the user signal and the downlink communications quality, the cell-identifying information of the cell serviced by the own base station, and the downlink transmission power value at that time (step 302) .

The radio controller 30, based on the downlink communications quality transmitted from the base stations 10 having set up the link with the mobile station 50 during the soft handover, out of the cells 20 serviced by the base stations 10, determines as the main cell the cell 20 having the best downlink communications quality (step 303).

Next, the radio controller 30 determines as the reference value the downlink transmission power value at the base station 10 servicing the main cell out of the downlink transmission power values received (step 304). Next, the radio controller 30 sets the offset value for the base stations 10 having set up the link with the mobile station 50 during the soft handover (step 305). Furthermore, the radio controller 30 adds the offset value to the reference value, or the target value (step 306) and transmits the target value and the user signal to the base stations 10 having set up the link with the mobile station 50 during the soft handover (step 307).

The base station 10 having set up the link with the mobile station 50 during the soft handover confirms the scrambling code being used in the downlink communications with the mobile station 50 (step 308) and in case the secondary scrambling code is included in the scrambling code, adds a predetermined value to the target value (step 309). Furthermore, the base station 10 sets up the downlink transmission power value so as to cause it to approach the target value further added to by the predetermined value (step 310) and transmits at the downlink transmission power level the user signal and the like to the mobile station 50 during the soft handover (step 311).

Thus, in the mobile communications system 1 according to the present embodiment, the base stations 10 having set up the link with the mobile station 50 during the soft handover report to the radio controller 30 the transmission power value of the downlink from the own base station to the mobile station 50 during the soft handover.

The radio controller 30, in order to perform the power-balancing control, determines as the reference value the transmission power value of the downlink at the base station 10 servicing the cell 20 having the best communications quality, out of the cells 20 serviced by the base stations 10, and adds to the reference value the offset value set based on the communications quality so as to report the target value for the corresponding base station 10. The base station 10 having set up with the link with the mobile station 50 during the soft handover controls the transmission power value of the downlink from the own base station to the mobile station 50 during the soft handover so as to cause it to approach the target value.

The downlink transmission power value at the base station 10 servicing the cell 20 having the best communications quality is generally a small value as an effect of fading is small. Therefore, a determining of the reference value of the transmission power for the power-balancing control as the downlink transmission power value at the base station 10 servicing the cell 20 having the best communications quality prevents the transmission power of the downlink at the base stations 10, having set up the link with the mobile station 50 during the soft handover, which configures the mobile communications system 1, from wastefully becoming large despite good communications quality, enabling a setting up of the appropriate downlink transmission power at each of the base stations 10.

Also, at the mobile communications system 1, the radio controller 30 is enabled to set a target value different for each base station 10 by setting for each base station 10 the offset value based on the communications quality so as to be added to the reference value. Specifically, as in a case of degraded communications quality, the signal from the base station 10 is not likely to be received at the mobile station 50, the base station 10 servicing the cell 20 with the degraded communications quality, taking into account the fact of a reducing of the degree of contribution to the receiving of the signal at the mobile station 50, determines the offset value so the target value is caused to be decreased the larger the degree of the degrading of the communications quality at the cell 20 serviced by the base station 10, enabling, for the base station 10 with a low contribution in the receiving of the signal at the mobile station 50, a reducing of the downlink transmission power, so as to prevent the downlink transmission power from becoming wastefully large.

Also, taking into account the fact that the downlink communications using the secondary scrambling code is likely to be impacted by a signal in other downlink communications using a primary scrambling code, in a case where the secondary scrambling code is used in the downlink communications, the radio controller 30 increasing the offset value or the target value corresponding to the base station 10 using the downlink, or the base station 10 increasing the target value to enable a setting up of the corresponding downlink transmission power value to a large value not likely to receive the effect of other downlinks.

Furthermore, while the radio controller 30, in the embodiment as described above, determines as the reference value the transmission power value of the downlink at the base station 10 servicing the cell 20, it may determine as the reference value the transmission power value of the downlink at the base station 10 servicing the cell 20 having a communications quality which is not the best but is above or equal to a predetermined level.

Also, the code-controlling section 18 within the base station 10 in the second embodiment may control by linking only the scrambling code including the secondary scrambling code with the call-identifying information of the downlink communications using the scrambling code.

## Claims

1. A mobile communications system (1), comprising a plurality of base stations (10), and a radio controller (30) which controls each of said base stations (10), wherein each said base station (10) comprises, a transmission power value reporting unit configured to report to said radio controller (30) a down link transmission power value and a communications quality of a downlink from said base station (10) itself to a mobile station (50), and, said radio controller (30) comprises:
a cell-determining unit (33) configured to determine, out of cells each serviced by one of said base stations (10), a cell having a best downlink communications quality of said base stations (10);
a reference-value determining unit (34) configured to determine, as a reference value, a downlink transmission power value of the base station (10) which services the determined cell;
an offset-value setting unit (37) configured to set, based on said communications quality, an offset value corresponding to each said base station (10), wherein the offset-value setting unit (37), in case of a secondary scrambling code being used in the communications using said downlink, causes an increase of the offset value for a base station (10) using said downlink;
a target-value setting unit (38) configured to set, based on said reference value and said corresponding offset value, a target value corresponding to each said base station (10); and a target-value reporting unit configured to report said target value to said base station (10); and
each said base station (10) further comprises, a transmission power control unit (15) configured to control the transmission power value of the downlink from said base station (10) itself to said mobile station (50) to set the transmission power value to approach said target value.

2. A radio controller (30) which controls a plurality of base stations (10) configuring a mobile communications system (1), the radio controller (30) comprising:
a transmission power value obtaining unit configured to obtain a downlink transmission power value and a communications quality, reported from each of said base stations (10), of a downlink used in communications from said base station (10) to a mobile station (50);
a cell-determining unit (33) configured to determine, out of cells each serviced by one of said base stations (10), a cell having a best downlink communications quality of said base stations (10);
a reference-value determining unit (34) configured to determine a downlink transmission power value of a base station (10) which services the determined cell, as a reference value of the downlink transmission power value at each said base station (10);
an offset-value setting unit (37) configured to set, based on said communications quality, an offset value corresponding to each said base station (10),
wherein the offset-value setting unit (37), in case of a secondary scrambling code being used in the communications using said downlink, causes an increase of the offset value for a base station (10) using said downlink;
a target-value setting unit (38) configured to set, based on said reference value and said corresponding offset value, a target value corresponding to each said base station (10); and
a target-value reporting unit configured to report said target value to each said base station (10).

3. The radio controller (30) as claimed in claim 2, wherein the offset-value setting unit (37), in case of degraded communication quality, sets said offset value to make said reference value to be decreased the larger the degree of the degradation in the communications quality of the cell serviced by said base station (10).

4. The radio controller (30) as claimed in claim 2, wherein the offset-value setting unit (37) sets the offset value for each said base station (10), based on a difference between the communications quality of the cell serviced by said base station (10), and the communications quality of the cell determined by said cell-determining unit (33).

5. The radio controller (30) as claimed in claim 2, wherein the offset-value setting unit (37), in case of more than one base station (10), which services a cell other than said cell having the best downlink communications quality determined by said cell-determining unit (33), existing, sets said offset value for each of said more than one base station (10) to be identical.

6. The radio controller (30) as claimed in claim 2, further comprising a table indicating a corresponding relationship between said communications quality and said offset value, wherein said offset-value setting unit sets, based on said table, the offset value for each said base station (10).

7. The radio controller (30) as claimed in claim 2, further comprising a target-value increasing unit configured, in a case where a secondary scrambling code is used in the communications using said downlink, to cause an increase of the target value corresponding to a base station (10) using said downlink.

8. A base station (10) which configures with one or more other base stations (10) a mobile communications system (1), the base station (10) comprising:
a transmission power value reporting unit configured to report a transmission power value and a communications quality of a downlink used in communications from said base station (10) itself to a mobile station (50), to a radio controller (30) according to Claim 2 which controls each of said base stations (10) configuring said mobile communications system (1);
a target-value obtaining unit configured to obtain a target value, reported from said radio controller (30), as the transmission power value of the downlink at, out of said base stations (10) configuring said mobile communications system (1), a base station (10) servicing a cell having a best downlink communications quality of said base stations (10);
a transmission power control unit (15) configured to control to set the transmission power value of the downlink from said base station (10) itself to said mobile station (50) to approach said target value;
and a target-value increasing unit configured to cause to increase, in a case where a secondary scrambling code is used in the communications using said downlink, the target value, and,
wherein said transmission power control unit (15) controls the transmission power value of the downlink from said base station (10) itself to said mobile station (50) to set the transmission power value to approach said target value set to be increased by said target-value increasing unit.

9. A base station (10) as claimed in claim 8, further comprising:
a downlink communications quality obtaining unit configured to obtain the communications quality, reported from said mobile station (50), of said downlink; and
a downlink communications quality reporting unit configured to report the communications quality of said downlink to said radio controller (30).

10. A method of controlling, in a mobile communications system comprising a plurality of base stations (10), and a radio controller (30) which controls said base stations (10), a transmission power value of each of said base stations (10), wherein said each base station (10) reports the downlink transmission power value and a communications quality of a downlink from said base station (10) itself to a mobile station (50);
said radio controller (30) determines, out of cells each serviced by one of said base stations (10), a cell having a best downlink communications quality of said base stations (10);
said radio controller (30) determines, as a reference value, the downlink transmission power value of a base station (10) which services the determined cell;
said radio controller (30) sets, based on said communications quality, an offset value corresponding to each said base station (10), and, in case of a secondary scrambling code being used in the communications using said downlink, causes an increase of the offset value for a base station (10) using said downlink;
said radio controller (30) sets, based on said reference value and said corresponding offset value, a target value corresponding to each said base station (10);
said radio controller (30) reports said corresponding target value to each said base station (10); and
each said base station (10) controls the transmission power value of the downlink from said base station (10) itself to said mobile station (50) to set the transmission power value to approach said target value.

## Patentansprüche

1. Mobilkommunikationssystem (1), umfassend eine Vielzahl von Basisstationen (10) und einen Funk-Controller (30), der jede der Basisstationen (10) steuert, wobei jede Basisstation (10) eine Sendeleistungswertmeldungseinheit umfasst, die entsprechend konfiguriert ist, um dem Funk-Controller (30) einen Abwärtsstrecken-Sendeleistungswert und eine Kommunikationsqualität einer Abwärtsstrecke von der Basisstation (10) selbst zu einer Mobilstation (50) zu melden, und der Funk-Controller (30) umfasst:
eine Zellenbestimmungseinheit (33), die entsprechend konfiguriert ist, um von den Zellen, die jeweils durch eine der Basisstationen (10) versorgt werden, eine Zelle mit einer besten Abwärtsstrecken-Kommunikationsqualität der Basisstationen (10) zu bestimmen;
eine Referenzwertbestimmungseinheit (34), die entsprechend konfiguriert ist, um einen Abwärtsstrecken-Sendeleistungswert der Basisstation (10), die die bestimmte Zelle versorgt, als Referenzwert zu bestimmen;
eine Korrekturwerteinstellungseinheit (37), die entsprechend konfiguriert ist, um auf der Grundlage der Kommunikationsqualität einen Korrekturwert entsprechend jeder Basisstation (10) einzustellen, wobei die Korrekturwerteinstellungseinheit (37) im Falle der Verwendung eines Sekundärverwürfelungscodes bei den Übertragungen, die die Abwärtsstrecke verwenden, eine Erhöhung des Korrekturwertes für eine Basisstation (10), die die Abwärtsstrecke verwendet, bewirkt;
eine Sollwerteinstellungseinheit (38), die entsprechend konfiguriert ist, um auf der Grundlage des Referenzwerts und des entsprechenden Korrekturwertes einen Sollwert entsprechend jeder Basisstation (10) einzustellen; und eine Sollwertmeldungseinheit, die entsprechend konfiguriert ist, um der Basisstation (10) den Sollwert zu melden; und
wobei jede Basisstation (10) ferner eine Sendeleistungssteuerungseinheit (15) umfasst, die entsprechend konfiguriert ist, um den Sendeleistungswert der Abwärtsstrecke von der Basisstation (10) selbst zu der Mobilstation (50) entsprechend zu steuern, um den Sendeleistungswert so einzustellen, dass eine Annäherung an den Sollwert erfolgt.

2. Funk-Controller (30), der eine Vielzahl von Basisstationen (10) steuert, die ein Mobilkommunikationssystem (1) konfigurieren, wobei der Funk-Controller (30) umfasst:
eine Sendeleistungswertübernahmeeinheit, die entsprechend konfiguriert ist, um einen von jeder der Basisstationen (10) gemeldeten Abwärtsstrecken-Sendeleistungswert und eine von jeder der Basisstationen (10) gemeldete Kommunikationsqualität einer bei Übertragungen verwendeten Abwärtsstrecke von der Basisstation (10) zu einer Mobilstation (50) zu übernehmen;
eine Zellenbestimmungseinheit (33), die entsprechend konfiguriert ist, um von den Zellen, die jeweils durch eine der Basisstationen (10) versorgt werden, eine Zelle mit einer besten Abwärtsstrecken-Kommunikationsqualität der Basisstationen (10) zu bestimmen;
eine Referenzwertbestimmungseinheit (34), die entsprechend konfiguriert ist, um einen Abwänsstrecken-Sendeleistungswert einer Basisstation (10), die die bestimmte Zelle versorgt, als Referenzwert des Abwärtsstrecken-Sendeleistungswertes in jeder Basisstation (10) zu bestimmen;
eine Korrekturwerteinstellungseinheit (37), die entsprechend konfiguriert ist, um auf der Grundlage der Kommumkationsqualität einen Korrekturwert entsprechend jeder Basisstation (10) einzustellen,
wobei die Korrekturwerteinstellungseinheit (37) im Falle der Verwendung eines Sekundärverwürfelungscodes bei den Übertragungen, die die Abwärtsstrecke verwenden, eine Erhöhung des Korrekturwertes für eine Basisstation (10), die die Abwärtsstrecke verwendet, bewirkt,
eine Sollwerteinstellungseinheit (38), die entsprechend konfiguriert ist, um auf der Grundlage des Referenzwertes und des entsprechenden Korrekturwertes einen Sollwert entsprechend jeder Basisstation (10) einzustellen; und
eine Sollwertmeldungseinheit, die entsprechend konfiguriert ist, um jeder Basisstation (10) den Sollwert zu melden.

3. Funk-Controller (30) nach Anspruch 2, wobei die Korrekturwerteinstellungseinheit (37) im Falle einer verminderten Kommunikationsqualität den Korrekturwert so einstellt, dass bewirkt wird, dass der Referenzwert sich verringert, je größer der Grad der Verminderung der Kommunikationsqualität der durch die Basisstation (10) versorgten Zelle ist.

4. Funk-Controller (30) nach Anspruch 2, wobei die Korrekturwerteinstellungseinheit (37) den Korrekturwert für jede Basisstation (10) auf der Grundlage einer Differenz zwischen der Kommunikationsqualität der durch die Basisstation (10) versorgten Zelle und der Kommumkationsqualität der durch die Zellenbestimmungseinheit (33) bestimmten Zelle einstellt.

5. Funk-Controller (30) nach Anspruch 2, wobei die Korrekturwerteinstellungseinheit (37) im Falle des Vorhandenseins von mehr als einer Basisstation (10), die eine andere Zelle als die durch die Zellenbestimmungseinheit (33) bestimmte Zelle mit der besten Abwärtsstrecken-Kommunikationsqualität versorgt, den Korrekturwert für jede der mehr als einen Basisstation (10) identisch einstellt.

6. Funk-Controller (30) nach Anspruch 2, ferner umfassend eine Tabelle, die eine entsprechende Beziehung zwischen der Kommunikationsqualität und dem Korrekturwert anzeigt, wobei die Korrekturwerteinstellungseinheit den Korrekturwert für jede Basisstation (10) auf der Grundlage der Tabelle einstellt.

7. Funk-Controller (30) nach Anspruch 2, ferner umfassend eine Sollwerterhöhungseinheit, die entsprechend konfiguriert ist, um im Falle der Verwendung eines Sekundärverwürfelungscodes bei den Übertragungen, die die Abwärtsstrecke verwenden, eine Erhöhung des Sollwertes entsprechend einer Basisstation (10), die diese Abwärtsstrecke verwendet, zu bewirken.

8. Basisstation (10), die mit einer oder mehreren anderen Basisstationen (10) ein Mobilkommunikationssystem (1) konfiguriert, wobei die Basisstation (10) umfasst:
eine Sendeleistungwertmeldungseinheit, die entsprechend konfiguriert ist, um einen Sendeleistungswert und eine Kommunikationsqualität einer bei Übertragungen verwendeten Abwärtsstrecke von der Basisstation (10) selbst zu einer Mobilstation (50) an einen Funk-Controller (30) nach Anspruch 2 zu melden, der jede der Basisstationen (10), die das Mobilkommunikationssystem (1) konfigurieren, steuert;
eine Sollwertübernahmeeinheit, die entsprechend konfiguriert ist, um einen von dem Funk-Controller (30) gemeldeten Sollwert als den Sendeleistungswert der Abwärtsstrecke in einer Basisstation (10) von den das Mobilkommunikationssystem (1) konfigurierenden Basisstationen (10), die eine Zelle mit einer besten Abwärtsstrecken-Kommunikationsqualität der Basisstationen (10) versorgt, zu übernehmen;
eine Sendeleistungssteuerungseinheit (15), die entsprechend konfiguriert ist, um die Einstellung des Sendeleistungswertes der Abwärtsstrecke von der Basisstation (10) selbst zu der Mobilstation (50) so zu steuern, dass eine Annäherung an den Sollwert erfolgt;
und eine Sollwerterhöhungseinheit, die entsprechend konfiguriert ist, um im Falle der Verwendung eines Sekundärverwürfelungscodes bei den Übertragungen, die diese Abwärtsstrecke verwenden, die Erhöhung des Sollwertes zu bewirken, und
wobei die Sendeleistungssteuerungseinheit (15) den Sendeleistungswert der Abwärtsstrecke von der Basisstation (10) selbst zu der Mobilstation (50) entsprechend steuert, um den Sendeleistungswert so einzustellen, dass eine Annäherung an den Sollwert erfolgt, der so eingestellt ist, dass eine Erhöhung durch die Sollwerterhöhungseinheit erfolgen kann.

9. Basisstation (10) nach Anspruch 8, ferner umfassend:
eine Abwärtsstrecken-Kommunikationsqualitätsübernahmeeinheit, die entsprechend konfiguriert ist, um die von der Mobilstation (50) gemeldete Kommunikationsqualität der Abwärtsstrecke zu übernehmen; und
eine Abwärtsstrecken-Kommunikationsqualitätsmeldungseinheit, die entsprechend konfiguriert ist, um dem Funk-Controller (30) die Kommunikationsqualität der Abwärtsstrecke zu melden.

10. Verfahren zur Steuerung eines Sendeleistungswertes jeder der Basisstationen (10) in einem Mobilkommunikationssystem mit einer Vielzahl von Basisstationen (10) und einem Funk-Controller (30), der die Basisstationen (10) steuert, wobei jede Basisstation (10) den Abwärtsstrecken-Sendeleistungswert und eine Kommunikationsqualität einer Abwärtsstrecke von der Basisstation (10) selbst zu einer Mobilstation (50) meldet;
der Funk-Controller (30) von den Zellen, die jeweils durch eine der Basisstationen (10) versorgt werden, eine Zelle mit einer besten Abwärtsstrecken-Kommunikationsqualität der Basisstationen (10) bestimmt;
der Funk-Controller (30) als Referenzwert den Abwärtsstrecken-Sendeleistungswert einer Basisstation (10) bestimmt, die die bestimmte Zelle versorgt;
der Funk-Controller (30) auf der Grundlage der Kommunikationsqualität einen Korrekturwert entsprechend jeder Basisstation (10) einstellt und im Falle der Verwendung eines Sekundärverwürfelungscodes bei den Übertragungen, die die Abwärtsstrecke verwenden, eine Erhöhung des Korrekturwertes für eine Basisstation (10), die die Abwärtsstrecke verwendet, bewirkt;
der Funk-Controller (30) auf der Grundlage des Referenzwertes und des entsprechenden Korrekturwertes einen Sollwert entsprechend jeder Basisstation (10) einstellt;
der Funk-Controller (30) den entsprechenden Sollwert an jede Basisstation (10) meldet; und
jede Basisstation (10) den Sendeleistungswert der Abwärtsstrecke von der Basisstation (10) selbst zu der Mobilstation (50) entsprechend steuert, um den Sendeleistungswert so einzustellen, dass eine Annäherung an den Sollwert erfolgt.

## Revendications

1. Système de communication mobile (1), comportant une pluralité de stations de base (10) et un contrôleur radio (30) lequel commande chacune desdites stations de base (10), dans lequel chaque dite station de base (10) comporte une unité de signalisation de valeur de puissance de transmission configurée de manière à signaler audit contrôleur radio (30) une valeur de puissance de transmission en liaison descendante et une qualité de communication d'une liaison descendante, de ladite station de base (10) elle-même à une station mobile (50), et ledit contrôleur radio (30) comporte :
une unité de détermination de cellule (33) configurée de manière à déterminer, parmi des cellules qui sont chacune desservies par l'une desdites stations de base (10), une cellule présentant une qualité de communication en liaison descendante optimale desdites stations de base (10) ;
une unité de détermination de valeur de référence (34) configurée de manière à déterminer, en qualité de valeur de référence, une valeur de puissance de transmission en liaison descendante de la station de base (10) laquelle dessert la cellule déterminée ;
une unité de définition de valeur de décalage (37) configurée de manière à définir, sur la base de ladite qualité de communication, une valeur de décalage correspondant à chaque dite station de base (10), dans laquelle l'unité de définition de valeur de décalage (37), dans le cas où un code d'embrouillage secondaire est utilisé dans la communication utilisant ladite liaison descendante, occasionne une augmentation de la valeur de décalage pour une station de base (10) utilisant ladite liaison descendante ;
une unité de définition de valeur cible (38) configurée de manière à définir, sur la base de ladite valeur de référence et de ladite valeur de décalage correspondante, une valeur cible correspondant à chaque dite station de base (10) ; et une unité de signalisation de valeur cible configurée de manière à signaler ladite valeur cible à ladite station de base (10) ; et
chaque dite station de base (10) comporte en outre, une unité de commande de puissance de transmission (15) configurée de manière à commander la valeur de puissance de transmission de la liaison descendante de ladite station de base (10) elle-même à ladite station mobile (50), en vue de définir la valeur de puissance de transmission afin qu'elle avoisine ladite valeur cible.

2. Contrôleur radio (30) lequel commande une pluralité de stations de base (10) configurant un système de communication mobile (1), le contrôleur radio (30) comportant :
une unité d'obtention de valeur de puissance de transmission configurée de manière à obtenir une valeur de puissance de transmission en liaison descendante et une qualité de communication, signalées à partir de chacune desdites stations de base (10), d'une liaison descendante utilisée dans les communications de ladite station de base (10) à une station mobile (50) ;
une unité de détermination de cellule (33) configurée de manière à déterminer, parmi des cellules qui sont chacune desservies par l'une desdites stations de base (10), une cellule présentant une qualité de communication en liaison descendante optimale desdites stations de base (10) ;
une unité de détermination de valeur de référence (34) configurée de manière à déterminer une valeur de puissance de transmission en liaison descendante d'une station de base (10) laquelle dessert la cellule déterminée, en qualité de valeur de référence de la valeur de puissance de transmission en liaison descendante au niveau de chaque dite station de base (10) ;
une unité de définition de valeur de décalage (37) configurée de manière à définir, sur la base de ladite qualité de communication, une valeur de décalage correspondant à chaque dite station de base (10) ;
dans lequel l'unité de définition de valeur de décalage (37), dans le cas où un code d'embrouillage secondaire est utilisé dans les communications utilisant ladite liaison descendante, occasionne une augmentation de la valeur de décalage pour une station de base (10) utilisant ladite liaison descendante ;
une unité de définition de valeur cible (38) configurée de manière à définir, sur la base de ladite valeur de référence et de ladite valeur de décalage correspondante, une valeur cible correspondant à chaque dite station de base (10) ; et
une unité de signalisation de valeur cible configurée de manière à signaler ladite valeur cible à chaque dite station de base (10).

3. Contrôleur radio (30) selon la revendication 2, dans lequel l'unité de définition de valeur de décalage (37), en cas de dégradation de la qualité de communication, définit ladite valeur de décalage en vue de diminuer ladite valeur de référence proportionnellement au niveau de la dégradation de la qualité de communication de la cellule desservie par ladite station de base (10).

4. Contrôleur radio (30) selon la revendication 2, dans lequel l'unité de définition de valeur de décalage (37) définit la valeur de décalage pour chaque dite station de base (10), sur la base d'une différence entre la qualité de communication de la cellule desservie par ladite station de base (10) et la qualité de communication de la cellule déterminée par ladite unité de détermination de cellule (33).

5. Contrôleur radio (30) selon la revendication 2, dans lequel l'unité de définition de valeur de décalage (37), au cas où il existe plus d'une station de base (10), laquelle dessert une cellule distincte de ladite cellule présentant la qualité de communication en liaison descendante optimale déterminée par ladite unité de détermination de cellule (33), définit ladite valeur de décalage de chacune de ladite plus d'une station de base (10) comme identique.

6. Contrôleur radio (30) selon la revendication 2, comportant en outre une table indiquant une relation correspondante entre ladite qualité de communication et ladite valeur de décalage, dans lequel ladite unité de définition de valeur de décalage définit, sur la base de ladite table, la valeur de décalage pour chaque dite station de base (10).

7. Contrôleur radio (30) selon la revendication 2, comportant en outre une unité d'augmentation de valeur cible configurée, au cas où un code d'embrouillage secondaire est utilisé dans les communications utilisant ladite liaison descendante, de manière à occasionner une augmentation de la valeur cible correspondant à une station de base (10) utilisant ladite liaison descendante.

8. Station de base (10) laquelle configurée, avec une ou plusieurs autres stations de base (10), un système de communication mobile (1), la station de base (10) comportant:
une unité de signalisation de valeur de puissance de transmission configurée de manière à signaler une valeur de puissance de transmission et une qualité de communication d'une liaison descendante utilisée dans les communications de ladite station de base (10) elle-même à une station mobile (50), à un contrôleur radio (30) selon la revendication 2 lequel commande chacune desdites stations de base (10) configurant ledit système de communication mobile (1) ;
une unité d'obtention de valeur cible configurée de manière à obtenir une valeur cible, signalée par ledit contrôleur radio (30), en tant que la valeur de puissance de transmission de la liaison descendante au niveau, parmi lesdites stations de base (10) configurant ledit système de communication mobile (1), d'une station de base (10) desservant une cellule présentant une qualité de communication en liaison descendante optimale desdites stations de base (10) ;
une unité de commande de puissance de transmission (15) configurée de manière à définir la valeur de puissance de transmission de la liaison descendante de ladite station de base (10) elle-même à ladite station mobile (50) afin qu'elle avoisine ladite valeur cible ;
et une unité d'augmentation de valeur cible configurée de manière à occasionner une augmentation, au cas où un code d'embrouillage secondaire est utilisé dans la communication utilisant ladite liaison descendante, de la valeur cible ; et
dans laquelle ladite unité de commande de puissance de transmission (15) commande la valeur de puissance de transmission de la liaison descendante, de ladite station de base (10) elle-même à ladite station mobile (50), en vue de définir la valeur de puissance de transmission afin qu'elle avoisine ladite valeur cible définie comme étant à augmenter par le biais de ladite unité d'augmentation de valeur cible.

9. Station de base (10) selon la revendication 8, comportant en outre :
une unité d'obtention de qualité de communication de liaison descendante configurée de manière à obtenir la qualité de communication, signalée par ladite station mobile (50), de ladite liaison descendante ; et
une unité de signalisation de qualité de communication de liaison descendante configurée de manière à signaler la qualité de communication de ladite liaison descendante audit contrôleur radio (30).

10. Procédé destiné à commander, dans un système de communication mobile comportant une pluralité de stations de base (10) et un contrôleur radio (30) lequel commande lesdites stations de base (10), une valeur de puissance de transmission de chacune desdites stations de base (10), dans lequel chaque dite station de base (10) signale dans un rapport la valeur de puissance de transmission en liaison descendante et une qualité de communication d'une liaison descendante de ladite station de base (10) elle-même à une station mobile (50) ;
ledit contrôleur radio (30) détermine, parmi des cellules qui sont chacune desservies par l'une desdites stations de base (10), une cellule présentant une qualité de communication en liaison descendante optimale desdites stations de base (10) ;
ledit contrôleur radio (30) détermine, en qualité de valeur de référence, la valeur de puissance de transmission en liaison descendante d'une station de base (10) laquelle dessert la cellule déterminée ;
ledit contrôleur radio (30) définit, sur la base de ladite qualité de communication, une valeur de décalage correspondant à chaque dite station de base (10), et, dans le cas où un code d'embrouillage secondaire est utilisé dans les communications utilisant ladite liaison descendante, occasionne une augmentation de la valeur de décalage pour une station de base (10) utilisant ladite liaison descendante ;
ledit contrôleur radio (30) définit, sur la base de ladite valeur de référence et de ladite valeur de décalage correspondante, une valeur cible correspondant à chaque dite station de base (10) ;
ledit contrôleur radio (30) signale ladite valeur cible correspondante à chaque dite station de base (10) ; et
chaque dite station de base (10) commande la valeur de puissance de transmission de la liaison descendante de ladite station de base (10) elle-même à ladite station mobile (50) en vue de définir la valeur de puissance de transmission afin qu'elle avoisine ladite valeur cible.
